# FASCICULE DE BREVET EUROPEEN

(11) **EP 1 534 434 B1**
(45) Date de publication et mention de la délivrance du brevet: **07.01.2009**
(21) Numéro de dépôt: 03761379.1
(22) Date de dépôt: 30.06.2003
(51) Int. Cl.: B02C 4/10, B02C 4/20, B02C 4/34, B02C 4/40, B02C 4/44, C10C 3/14, E01C 19/10

(54) **PROCEDE ET UNITE DE RECYCLAGE D'UNE MEMBRANE BITUMINEUSE**
VERFAHREN UND EINHEIT ZUM RECYCELN EINER BITUMENMEMBRAN
METHOD AND UNIT FOR RECYCLING A BITUMINOUS MEMBRANE

(30) Priorité: 28.06.2002 BE 200200418
(43) Date de publication de la demande: 01.06.2005
(73) Titulaire: IMPERBEL S.A., 1651 Beersel (LOT) (BE)
(72) Inventeur: MACALUSO, Nino, B-1651 BEERSEL (LOT) (BE); BERTRAND, Eric, B-1651 BEERSEL (LOT) (BE)
(74) Mandataire: Quintelier, Claude
(86) Numéro de dépôt international: PCT/BE2003/000116
(87) Numéro de publication internationale: WO 2004/002628

(56) Documents cités:
- US-A- 1 355 093
- US-A- 2 156 619
- US-A- 4 185 784
- PATENT ABSTRACTS OF JAPAN vol. 1995, no. 10, 30 novembre 1995 (1995-11-30) & JP 07 188673 A (KAWASAKI STEEL CORP), 25 juillet 1995 (1995-07-25)

## Description

La présente invention concerne une unité de recyclage agencée pour le recyclage d'une membrane bitumineuse pourvue d'au moins une armature, laquelle unité comporte un premier rotor logé dans un premier stator, pourvu d'une chambre délimitée par une paroi externe du premier rotor.

Une telle unité de recyclage est connue du brevet US-A-4,185,784. Dans l'unité connue, la matière à recycler est introduite dans l'unité de recyclage pourvue de moyens de chauffage. La matière à recycler fond ainsi sous l'effet de la chaleur et de la friction avec le rotor de l'unité. La rotation du rotor défibre les armatures présentes dans la matière à recycler de telle façon que le produit ainsi obtenu soit recyclable. L'unité connue comporte une chambre qui est aménagée dans la paroi du stator de telle façon que la largeur de cette chambre se réduit à partir de l'entrée provoquant ainsi un effet d'entonnoir qui pousse la matière vers le rotor.

Un désavantage du procédé et de l'unité de recyclage connus est qu'ils ne sont pas tout à fait appropriés pour le recyclage de membranes bitumineuses pourvues d'au moins une armature. En effet, cette armature, généralement constituée de fibres, est souvent difficile à détruire complètement. Des amas de fibres restent ainsi dans le produit issu du procédé de recyclage et empêchent d'utiliser ce produit, en tant que matière première, pour la fabrication de membranes neuves. De plus, l'aménagement de la chambre dans le stator impose une construction non-cylindrique du stator, ce qui impose une technique assez complexe de fabrication du stator. Enfin la matière est insuffisamment triturée pour être correctement recyclée.

L'invention a pour but de réaliser une unité de recyclage qui permet de recycler de façon adéquate des membranes bitumineuses pourvues d'au moins une armature et d'obtenir ainsi un produit recyclé qui peut être utilisé en tant que matière première, sans pour autant opter pour une construction complexe du stator.

A cette fin, une unité de recyclage suivant l'invention est caractérisée en ce que en ce que la chambre est une chambre de trituration formée par un évidement aménagé dans un contre-élément monté sur le stator qui est sensiblement cylindrique, laquelle chambre de trituration comporte un moyen d'ajustement agencé pour ajuster le volume et/ou la forme de la chambre et en ce qu'au moins un racleur agencé pour racler la paroi externe du rotor est monté en aval de la chambre de trituration, lequel racleur s'étend sur au moins une partie de la longueur du premier rotor et possède un profil en escalier ayant au moins une première et une deuxième marche, la première marche, qui est située près d'une sortie de l'unité de recyclage, étant disposée la plus près de la paroi externe du premier rotor. En soumettant les morceaux à une trituration l'on parvient à défibrer l'armature présente dans les morceaux de membrane. De plus, le fait de pouvoir modifier la forme et/ou le volume de la chambre par le positionnement du contre-élement permet non seulement une construction plus simple et moins onéreuse de l'unité, mais également une adaptation des dimensions de la chambre aux types de membranes à recycler. Le liant bitumineux contenu dans les morceaux peut ainsi être mis en fusion ce qui permet de le récupérer plus facilement et d'obtenir une matière recyclée permettant une utilisation élargie, notamment en tant que matière première.

La présence du racleur permet de nettoyer la paroi du rotor et veille à ce que le bitume recyclé soit guidé hors du broyeur. Le profil en escalier du racleur permet d'établir une distinction entre la matière suffisamment triturée qui est alors évacuée par la sortie et celle insuffisamment triturée qui n'est pas évacuée et continue ainsi à être traitée.

De préférence les morceaux triturés sont soumis à l'action d'une lame de couteau faisant partie du contre-élément et agencée pour défibrer l'armature. La lame de couteau augmente la défibration de l'armature.

Le recyclage d'une membrane bitumineuse est encore rendu plus compliqué lorsque cette dernière est pourvue en surface d'un revêtement minéral tels que des paillettes d'ardoise ou des granules. En effet, ces paillettes ou ces granules sont insuffisamment broyés dans les procédés connus et restent ainsi sous forme de grosses particules dans la matière broyée. La matière recyclée ne peut ainsi être utilisée comme matière première de qualité. De plus, la présence de ces grosses particules dans la matière broyée va entraîner à son tour une usure prématurée du rotor. Pour résoudre ce problème, l'unité suivant l'invention est caractérisée en ce que le contre-élément comporte une lame de couteau agencée pour pulvériser le revêtement minéral contre la paroi externe du rotor, laquelle lame de couteau est montée en aval de la chambre. Ceci permet d'également recycler ce type de membrane. Le revêtement minéral est converti en poudre par l'action du couteau et se mélange ainsi convenablement à la masse bitumineuse recyclée.

Une première forme de réalisation préférentielle d'une unité suivant l'invention est caractérisée en ce que la paroi externe du rotor possède un profil rainuré. La présence de rainures permet d'entraîner le recyclât et de le guider vers la chambre de trituration améliorant ainsi l'efficacité de l'unité.

De préférence le contre-élément et/ou le stator sont traités avec une substance anti-usure, en particulier au carbure de tungstène. Ceci rend la matière dont sont fabriqués le stator et le corps cylindrique plus résistante à l'abrasion et les protège mieux contre l'impact du revêtement minéral.

Une deuxième forme de réalisation préférentielle d'une unité de recyclage suivant l'invention est caractérisée en ce qu'en aval de la chambre de trituration un déflecteur est disposé dans une ouverture de sortie de l'unité de recyclage, ledit déflecteur étant disposé le long d'au moins une partie de la paroi externe du rotor. La présence du déflecteur permet de maintenir plus longtemps la matière recyclée en contact avec le rotor et ainsi de lubrifier ce dernier avec la matière recyclée. De plus, la présence du déflecteur en aval de la chambre de trituration et le fait que ce déflecteur permet de maintenir de la matière contre le rotor a pour avantage complémentaire d'étouffer dans la matière recyclée, d'éventuelles étincelles qui auraient pu être créées lors du broyage du revêtement minéral.

De préférence l'unité de recyclage comporte une ouverture d'entrée et une ouverture de sortie, disposées le long d'un même axe qui est décalé par rapport à un axe central vertical du rotor. Un effet d'aspiration est ainsi créé sur la matière par la rotation même du rotor. Ceci permet un meilleur passage de la matière dans l'unité de recyclage.

Une troisième forme de réalisation préférentielle d'une unité de recyclage suivant l'invention comporte un second rotor logé dans un second stator pourvu d'une chambre de trituration, lesquels second stator et rotor sont montés en aval du premier stator et rotor. La présence de deux rotors placés en cascade permet de procéder au broyage en deux étapes. Ainsi la pulvérisation des paillettes et des granules se déroulera en phases granulométriques successives si la dimension de la chambre de trituration dans le deuxième stator par rapport à celle dans le premier stator est inférieure.

Une quatrième forme de réalisation d'une unité suivant l'invention est caractérisée en ce qu'un des premiers et seconds stators possède une entrée centrale et l'autre une entrée latérale, le stator ayant l'entrée centrale possède une sortie située à une extrémité du rotor, à chacun des rotors est associé un desdits racleurs, le racleur associé au rotor se trouvant dans le stator ayant sa sortie à l'extrémité du rotor est disposé de façon à ce que le raclage soit réalisé à ladite extrémité, le racleur associé au rotor dont le stator possède une entrée latérale est disposé au centre du rotor auquel il est associé. On utilise ainsi au maximum la capacité des deux rotors et des deux stators.

De préférence au moins un des racleurs est monté sur un pivot agencé pour faire pivoter le racleur entre une première position où le racleur racle le long du rotor, une seconde position où le racleur obture une sortie de l'unité orientant le flux vers une sortie latérale, et une troisième position où le racleur libère totalement l'ouverture de façon à permettre l'évacuation par la force centrifuge ou le nettoyage de la sortie. Le fait de pouvoir obturer la sortie permet de maintenir la matière plus longtemps dans l'unité et d'augmenter ainsi la trituration de la matière. Ceci permet donc d'utiliser la même unité pour un grand nombre de types de membranes à recycler.

L'invention sera maintenant décrite plus en détail à l'aide des dessins reprenant des exemples de réalisation d'une unité de recyclage suivant l'invention. Dans les dessins :
la figure 1 montre une vue d'ensemble d'une unité de recyclage suivant l'invention;
les figures 2 a) et 2 b) montrent une vue en coupe à travers le stator et le rotor d'un premier exemple de réalisation d'une unité de recyclage pourvue d'une chambre de trituration;
les figures 3 et 4 montrent une vue en coupe, à travers le stator et le rotor, d'autres exemples de réalisation d'une unité de recyclage pourvue d'une chambre de trituration;
la figure 5 montre une vue en coupe à travers le stator et le rotor d'encore un autre exemple de réalisation d'une unité de recyclage ayant deux rotors et deux stators;
la figure 6 montre une vue en coupe à travers le stator et le rotor d'une autre forme de réalisation d'une unité de recyclage suivant l'invention;
la figure 7 illustre en détail une partie du rotor et du couteau;
la figure 8 illustre une vue en coupe à travers le stator et le rotor d'une unité de recyclage ayant deux rotors, deux stators et deux racleurs; et
la figure 9 illustre une vue en coupe à travers le stator et le rotor à une extrémité de ces derniers.

Dans les dessins une même référence a été attribuée à un même élément ou un élément analogue.

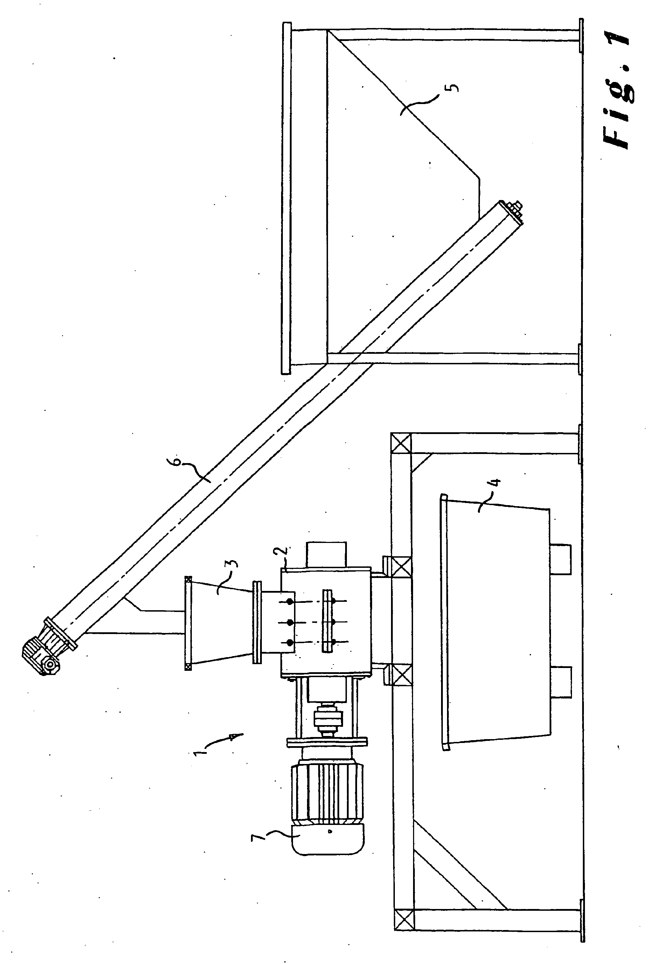

Dans l'exemple de réalisation illustré à la figure 1, l'unité de recyclage 1, suivant l'invention, comporte une trémie d'alimentation 3 reliée à l'entrée d'un premier organe 2 pourvu d'un rotor logé dans un stator. Un moteur 7 entraîne en rotation le rotor. La vitesse de rotation est par exemple de 100 à 3000 tours/min. La sortie du premier organe débouche au dessus d'une cuve 4 dans laquelle est récupérée la substance visqueuse débitée par le premier organe.

Pour procéder au recyclage de la membrane, celle-ci est d'abord réduite en morceaux, par exemple par découpage, qui sont introduits dans une autre trémie d'alimentation 5. Le découpage préalable des bouts de membrane et morceaux dépend d'une part de la taille des bouts de membrane et d'autre part du profil du rotor à hauteur de l'entrée de l'organe. Une vis d'alimentation ayant un pas de vis grand et profond sera mieux à même de traiter des grands morceaux qu'une vis à pas petit et profondeur réduite.

Les membranes sont généralement pourvues d'une armature, par exemple constituée par au moins un voile de verre, un non-tissé polyester ou une grille composite. Plus particulièrement, la membrane peut également être pourvue en surface d'un revêtement minéral, par exemple formé par des paillettes ou des granules. Un élément de transport 6 transporte les morceaux de l'autre trémie 5 vers la trémie 3. Les morceaux sont introduits soit en continu soit de façon séquencée en fonction du débit de l'unité de recyclage.

A partir de la trémie 3, les morceaux sont transportés vers le rotor afin d'y être traités. Ce traitement comprend en outre le déchirement de l'armature encore présente dans les morceaux. La paroi du stator comporte de préférence un corps de chauffe dans lequel circule un liquide de chauffage, par exemple de l'huile permettant de chauffer l'organe de recyclage et donc les morceaux de membrane introduits dans l'organe. Un jeu de dimension prédéterminée est laissé entre la paroi intérieure du stator et l'enveloppe extérieure du rotor. Ce jeu est de préférence situé entre 0,1 et 5 mm. Après traitement par le rotor, la matière traitée, qui forme alors une substance pâteuse, sort de l'organe pour tomber dans la trémie 4 de l'unité de recyclage.

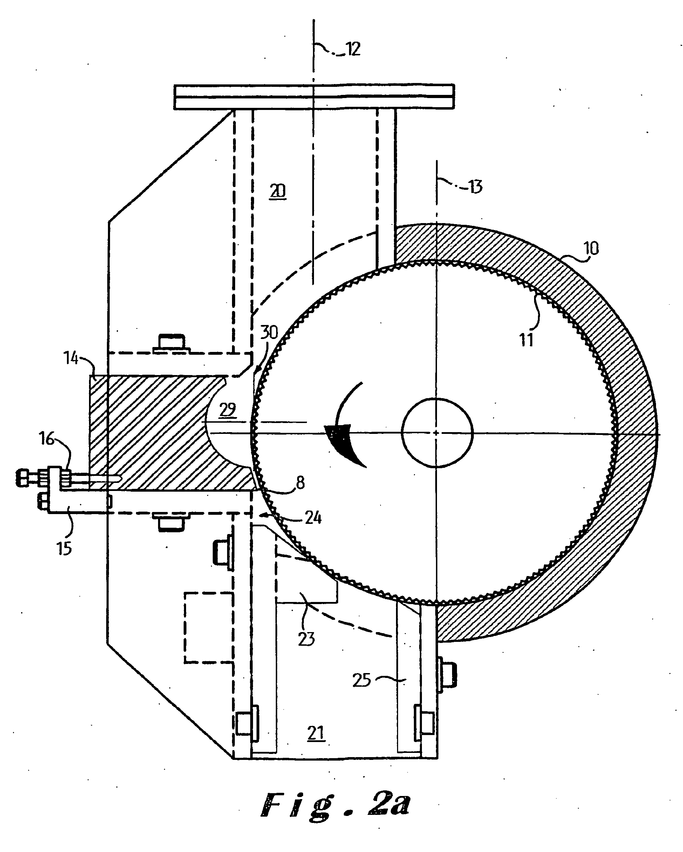

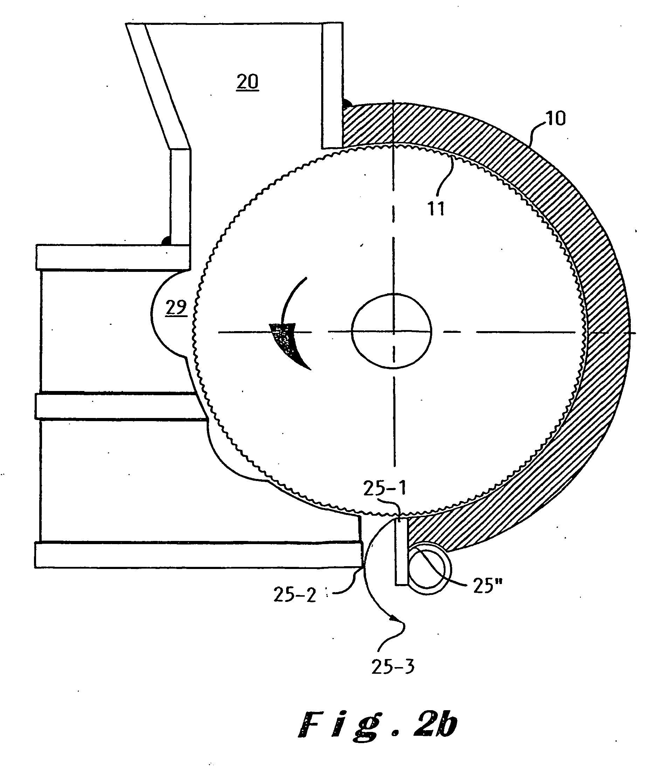

Dans l'exemple de réalisation illustré à la figure 2 a, l'unité de recyclage comporte un premier stator 10, dans lequel est logé un premier rotor 11. Le stator est d'une géométrie sensiblement cylindrique ce qui facilite sa fabrication. L'entrée 20 et la sortie 21 sont situées le long d'un même axe vertical 12 qui est décalé par rapport à l'axe vertical central 13 du rotor. Ce décalage a pour effet de créer, par la rotation du rotor 11 un effet d'aspiration sur les morceaux introduits dans l'entrée 20. Il est également possible de décaler l'entrée et la sortie l'une par rapport à l'autre comme illustré à la figure 2 b.

La forme de réalisation d'une unité de recyclage suivant l'invention et illustrée à la figure 2 a, est pourvue d'une chambre de trituration 29. Dans l'exemple illustré, la chambre de trituration est délimitée d'une part par un évidement réalisé dans un contre-élément 14 monté sur le stator et d'autre part par une paroi externe du premier rotor. La chambre de trituration 29 permet à la masse introduite dans l'ouverture d'entrée de s'y accumuler temporairement. Puisque la chambre est délimitée par la paroi externe du rotor, la masse bitumineuse, qui se trouve dans cette chambre, va être entraînée en rotation par la rotation du rotor et tourbillonner ainsi dans la chambre 29. Ainsi, la matière froide introduite va chauffer plus rapidement et sera plus facilement triturée. En effet, la force centrifuge imposée à la masse par le rotor va la faire chauffer plus rapidement. La masse ainsi présente dans la chambre va être malaxée et/ou broyée afin de la mettre en fusion. Lorsque l'unité est équipée de moyens de chauffage, ces derniers contribuent à chauffer ladite masse. Le passage 30 qui s'étend entre l'ouverture d'entrée 20 et la chambre de trituration est choisi suffisamment large, de telle façon à faciliter l'accès à la chambre de trituration.

La chambre de trituration peut être montée de façon rigide dans le stator, toutefois elle est de préférence montée de façon ajustable et démontable dans le stator. A cette fin, la chambre de trituration est montée sur un premier support 15 muni d'un moyen d'ajustement 16, par exemple formé par une vis et un boulon. Les moyens d'ajustement permettent non seulement le montage et le démontage de la chambre, mais également de faire varier la dimension de la chambre en l'approchant ou en la reculant par rapport à la paroi externe du rotor. De plus, un ensemble de chambres de trituration, ayant chacune une dimension différente, peut être prévu. Ainsi il est possible de modifier le volume ou la configuration de la chambre en montant une chambre de dimension différente. Les dimensions différentes de la chambre permettent d'utiliser une même unité pour différents types de membranes bitumineuses et d'adapter ainsi la trituration au type de membrane. Ainsi par exemple, pour des morceaux de grande taille, la dimension de la chambre sera supérieure à celle utilisée pour des morceaux de taille plus petite. Lorsque les morceaux proviennent d'une membrane ayant plusieurs nappes de fibres et pourvue de fibres de verre, une chambre de grande dimension sera de préférence utilisée afin d'avoir suffisamment de volume et à permettre un temps de malaxage plus élevé. La forme et la dimension de la chambre de trituration permettent de capturer la masse à recycler en vue de la porter à fusion par friction.

Parce que les morceaux de membranes sont triturés dans la chambre 29, un cisaillement de l'armature présente dans les morceaux de membrane est obtenu. De plus, la trituration permet, pour ainsi dire, de lubrifier tant le rotor que l'évidement dans le contre-élément 14 et réduit ainsi l'usure de l'unité.

Une extrémité 8 du contre-élément 14 et située en aval de la chambre 29, forme la pointe d'une lame d'un couteau qui sert à cisailler davantage les morceaux triturés dans la chambre et à défibrer l'armature présente dans les morceaux. La lame du couteau sert également à cisailler et pulvériser le revêtement minéral pourvu en surface de la membrane bitumineuse.

En aval de la chambre de trituration est monté un déflecteur 23. Le déflecteur est monté sur le stator et disposé dans l'ouverture de sortie 21, le long d'une partie de la paroi externe du rotor 11. Le déflecteur possède de préférence une forme trapézoïdale et délimite une première cavité 24, formée entre la partie inférieure du support 15, la partie supérieure du déflecteur 24, le stator et le rotor Ainsi, la masse bitumineuse qui a passé la chambre peut temporairement s'accumuler dans cette première cavité qui forme ainsi un tampon. A partir de ce tampon, la masse fondue sera alors amenée par le déflecteur le long du rotor et lubrifiera ce dernier.

Un racleur 25 est monté en aval du déflecteur également dans l'ouverture de sortie 21. Le racleur et le déflecteur sont disposés de telle façon à être à distance l'un de l'autre sur des flancs opposés de l'ouverture de sortie. Ainsi, un couloir est créé entre le déflecteur et le racleur par lequel la matière traitée peut atteindre l'ouverture de sortie. Le racleur est monté sur un support 26, à l'aide de moyens d'ajustement 27. Le racleur sert à racler la paroi externe du rotor de telle façon à racler la matière qui s'accumulerait sur cette paroi. De préférence le racleur s'étend sur au moins une partie de la longueur du rotor.

La figure 2 b illustre une forme de réalisation de l'unité suivant l'invention où le racleur est monté sur un pivot 25" agencé pour faire pivoter le racleur entre une première position (25-1) où le racleur racle le long du rotor, une deuxième position (25-2) où le racleur obture la sortie de l'unité et une troisième position (25-3) où le racleur libère totalement l'ouverture. Lorsque le racleur est dans la deuxième position, la masse peut soit continuer à circuler dans l'unité soit, lorsque l'unité est équipée d'une sortie latérale être orientée vers cette sortie latérale. Lorsque le racleur obstrue la sortie de l'unité, la matière, qui continue à circuler dans l'unité va chauffer davantage par la friction de cette matière avec le stator et le rotor. Lorsque le racleur est dans la troisième position, l'ouverture est libre et la masse est évacuée par la force centrifuge. Cette dernière position permet également de nettoyer la sortie puisqu'elle est largement ouverte.

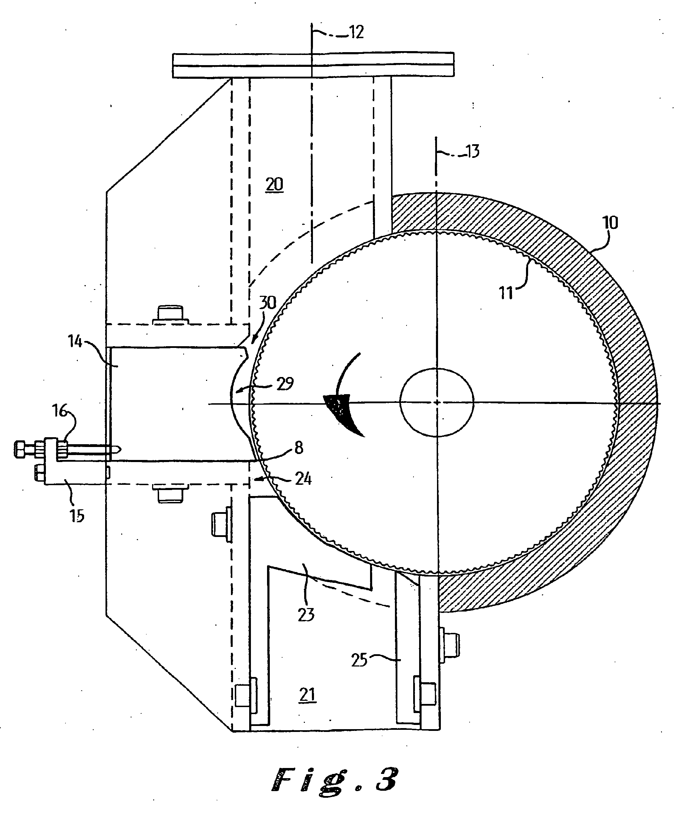

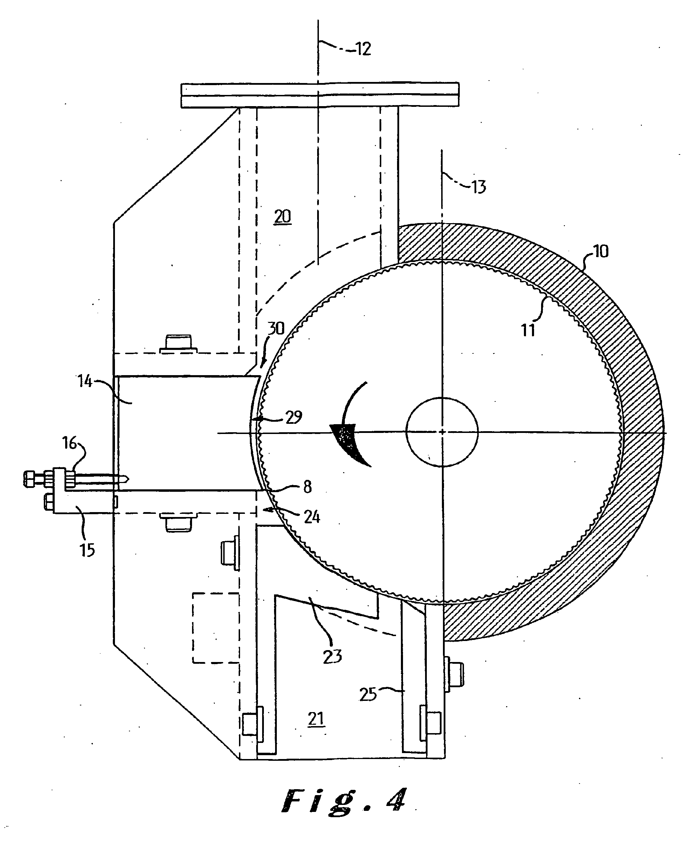

Les figures 3 et 4 montrent d'autres formes de réalisation de la chambre de trituration 29 et du déflecteur 23. Ainsi dans l'exemple illustré à la figure 3, la chambre possède un rayon de courbure plus court que celui de la chambre illustrée en figure 2, alors que dans l'exemple illustré à la figure 4 la chambre est de plus petite dimension par rapport à celle illustrée à la figure 2. Le déflecteur est quant à lui de plus grande dimension.

Il est également possible de monter dans un même stator plusieurs chambres en aval l'une de l'autre. Chacune des chambres étant de préférence montée de façon démontable.

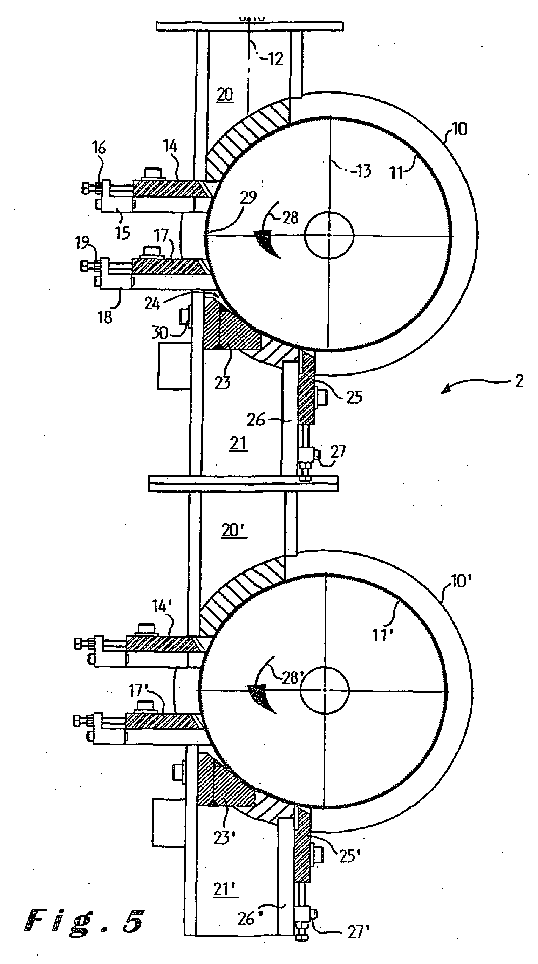

La figure 5 illustre une autre forme de réalisation d'une unité suivant l'invention où la chambre est de plus petite dimension et aboutit à la pointe d'une lame d'un couteau 17 qui délimite également la chambre. De plus, dans l'exemple de réalisation illustré à la figure 5, l'unité de recyclage comporte en plus du premier stator 10 et du premier rotor 11 également un second stator 10' et un second rotor 11'. Les premiers et seconds stators et rotors ont de préférence une construction sensiblement identique et sont placés en cascade de telle façon que le second est en aval du premier. Ainsi une sortie 21 du premier débouche dans une entrée 20' du second. Pour faciliter la compréhension, les éléments identiques du second organe ont été indiqués à l'aide de la même référence que celle utilisée pour le premier mais pourvue d'une prime.

Chaque unité comporte une première 14, 14' et une deuxième 17, 17' lame de couteau, qui sont montées sur un premier 15, 15' et un deuxième 18, 18' support. Ces derniers étant fixés sur le stator. Les lames de couteau sont montées de façon ajustable grâce aux moyens d'ajustement 16, 19. Les moyens d'ajustement permettent non seulement le montage et le démontage des lames de couteau, mais également de faire varier la distance entre la pointe de chaque lame de couteau et le rotor. Ainsi, par exemple, la distance entre la pointe des couteaux 14, 17, 14' et 18' peut être de 1,5 mm, 1 mm, 0,5 mm et 0,2 mm respectivement. Cette variation de distance permet de réduire de plus en plus la taille des fibres et du revêtement minéral. Il va de soi que la forme de réalisation avec deux rotors et deux stators, chacun muni de deux lames de couteau est uniquement donnée à titre d'exemple et que d'autres formes de réalisation avec seulement un rotor et un stator muni d'une seule lame ou avec davantage de rotors et de stators chacun muni d'une ou de plusieurs lames de couteau sont également possibles.

Pour recycler les morceaux de membrane bitumineuse, ces derniers sont introduits dans l'ouverture d'entrée 20 du premier organe. Le cas échéant, la dimension de la chambre est ajustée soit en déplaçant la chambre, soit en montant une chambre appropriée pour le type de membrane à traiter. La rotation, indiquée par la flèche 28, du rotor et le décalage de l'ouverture 20 par rapport à l'axe central 13 provoquent l'aspiration vers le rotor de la matière introduite. Celle-ci va dans un premier temps s'accumuler dans l'ouverture sur la paroi externe du rotor qui traverse l'ouverture lors de sa rotation. La masse peut chauffer plus rapidement si le stator et le rotor sont chauffés à l'aide du corps de chauffe. La masse chauffée va alors, par la rotation du rotor, être entraînée vers la chambre de trituration 29 et le cas échéant vers la première lame de couteau 17 qui va déstructurer la structure de l'armature et le cas échéant pulvériser les paillettes ou granules du revêtement en fonction de la dimension de la chambre et/ou de la distance qui sépare la pointe du couteau de la paroi externe du rotor. Ainsi, un premier broyage et découpage des morceaux de membrane est réalisé. Après avoir passé la première lame de couteau, la masse a monté en température sous l'effet de la friction et de la chaleur présente dans le stator et le rotor. Ainsi la masse va davantage se liquéfier avant d'atteindre le cas échéant la deuxième lame de couteau. Comme cette dernière est plus rapprochée de la paroi externe du rotor, le découpage des fibres se fera davantage et le revêtement minéral sera davantage concassé.

Après avoir passé les lames de couteau, la masse chaude va temporairement s'accumuler dans la cavité 24 pour chauffer davantage et atteindre son point de fusion pour être ensuite amenée le long de la paroi externe du rotor à l'aide du déflecteur 23. La masse chaude lubrifie ainsi le rotor. Ensuite, la masse atteint le couloir entre le déflecteur 23 et le racleur 25 pour chuter dans l'ouverture de sortie 21 sous l'effet de gravité. Le racleur 25 veille à racler la paroi externe du rotor, de telle façon à empêcher que la masse, qui est collante à cause de la présence de bitume chaud, s'accumule sur le rotor et empêche ainsi sa rotation. La distance entre le racleur et la paroi externe du rotor est choisie de telle façon à ce qu'un peu de masse bitumineuse reste sur le rotor et lubrifie son mouvement. Dans l'exemple de réalisation suivant la figure 5, la masse qui a atteint l'ouverture de sortie 21 tombe alors dans l'ouverture d'entrée 20' du second organe où un traitement analogue lui sera appliqué. Comme toutefois dans le second organe les lames de couteau sont plus proches du rotor par rapport au premier, les fibres et le revêtement sont davantage broyés de telle façon à ce que la masse qui quitte l'ouverture de sortie 21' est formée par une substance pâteuse sensiblement homogène.

La figure 5, comme décrit au préalable, illustre une unité où deux stators et rotors sont montés en cascade, chacun étant équipé de couteaux. Toutefois, il est également possible de monter deux stators et rotors en cascade où chacun est équipé d'une chambre de trituration comme illustré aux figures 2 à 4.

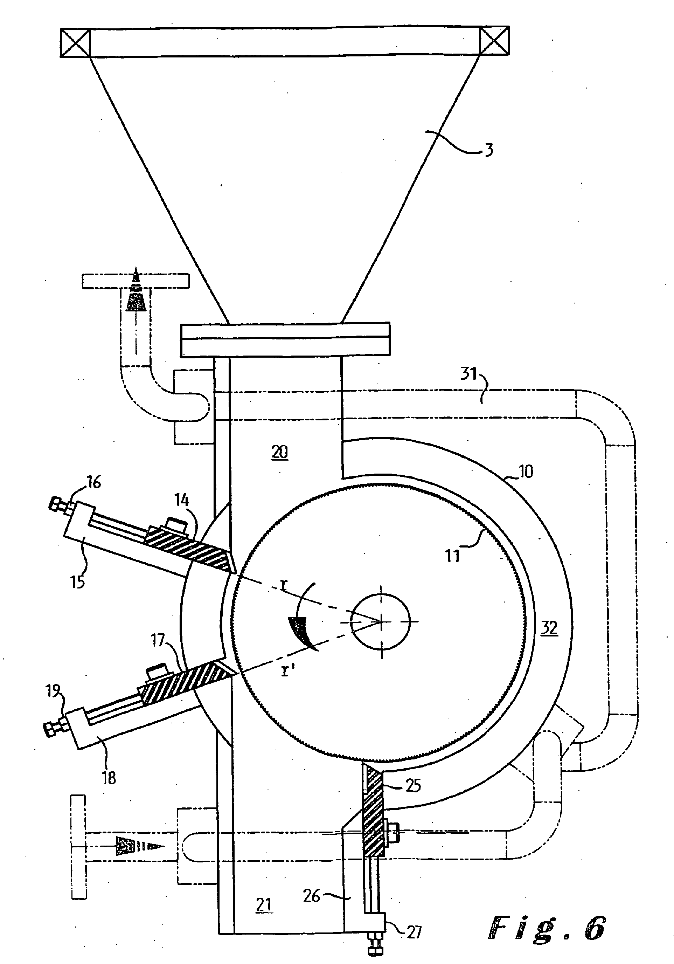

La figure 6 montre une autre forme de réalisation d'une unité de recyclage suivant l'invention. Cette figure montre également le corps de chauffage 31 qui permet de chauffer l'unité. Ce corps de chauffage comporte par exemple des conduites qui amènent un liquide chauffé dans une enveloppe externe 32 du stator.

La première lame 14 du premier couteau est placée sur le bord périphérique du stator et pointe vers la paroi externe du rotor. La lame est profilée et la pointe de la première lame 14 est orientée suivant un rayon r du rotor et forme un angle aigu avec la tangente du rotor. La première lame est montée de façon démontable sur un support 15. Le support 15 est placé sur le stator de façon à être accessible de l'extérieur, ce qui facilite le montage et le démontage de la lame. Il suffit en effet de faire glisser la lame sur le guide pour la monter ou la démonter. De plus, le glissement de la lame sur le moyen d'ajustage 16 permet d'ajuster la position de la lame et donc de régler son écartement par rapport au rotor.

Au moins une deuxième lame 17 d'un deuxième couteau est placée sur le bord périphérique du stator.

De préférence, les lames de couteau et/ou le stator cylindrique sont traités avec une substance anti-usure, comme par exemple du carbure de tungstène, ce qui les rend mieux résistants à l'impact provoqué par les paillettes ou granules qui forment le revêtement minéral de la membrane bitumineuse à broyer. De plus, les lames de couteau sont de préférence montées de telle façon à ce que l'espacement des lames vis-à-vis de la paroi externe du rotor est réglable. Ceci est par exemple réalisé à l'aide de glissières ou de rainures crantées.

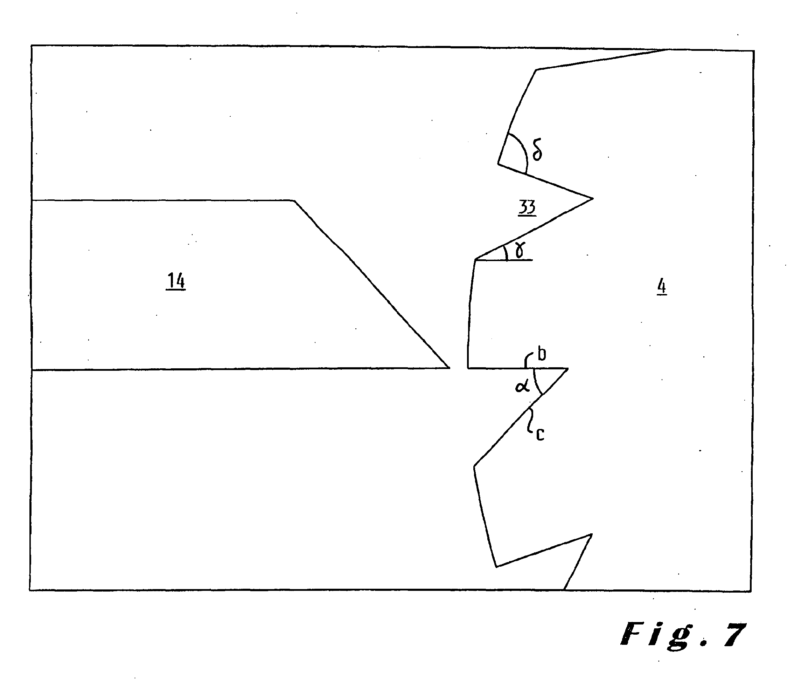

De préférence, la paroi du rotor 11 est pourvue d'un profil rainuré comme illustré à la figure 7. Ce profil est formé par des évidements 33 de forme triangulaire. Les triangles sont formés de telle sorte que le côté c forme un angle γ aigu avec la tangente au rotor. Le côté c possède d'ailleurs une longueur plus élevée que le côté b. De plus, le côté b forme de préférence un angle δ = 90° avec la tangente au rotor. Ainsi, lorsque chaque côté b se trouve à hauteur d'une lame, ce côté b se trouve dans le prolongement de la pointe de la lame permettant ainsi d'entraîner la masse entre la lame et le rotor. L'angle α entre les côtés b et c est par exemple situé entre 15 et 75° et le côté b a une longueur 0,1 ≤ b ≤ 3 alors que le côté a a 0,1 ≤ a ≤ 4 mm.

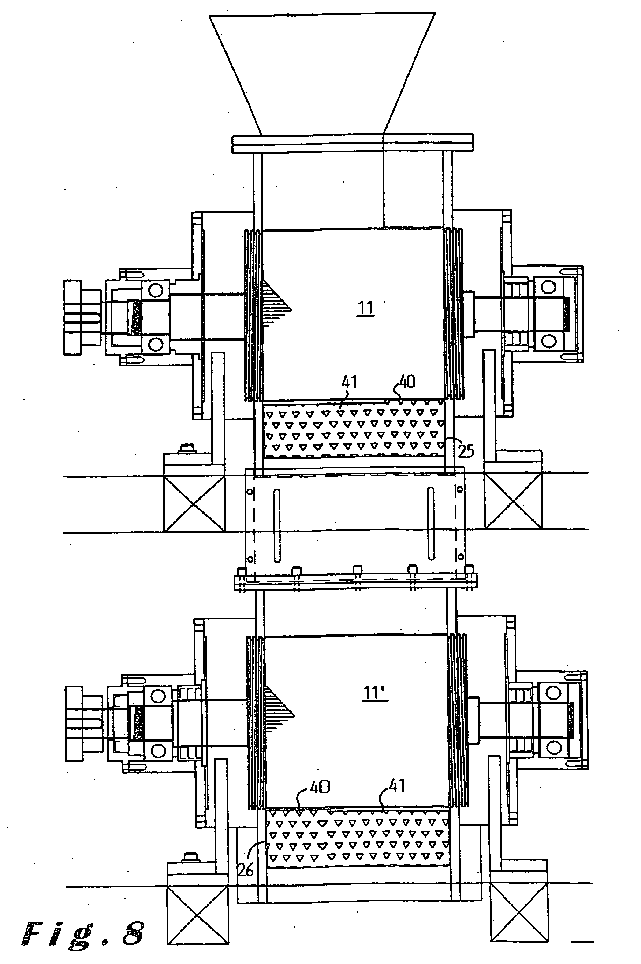

La figure 8 illustre un exemple de réalisation d'une unité de recyclage suivant l'invention ayant deux rotors et deux stators montés en cascade. Un racleur 25 étant associé au premier rotor 11, alors qu'un racleur 26 est associé au second rotor 11'. Le premier et le second rotor étant disposés de façon à ce que les morceaux triturés circulant le long du second rotor circulent en sens opposé par rapport à celui du premier rotor. Ainsi dans l'exemple de la figure 8 les morceaux à traiter sont introduits du coté gauche du premier rotor 11 et la matière triturée circule de gauche à droite. Elle arrive alors à la sortie du rotor 11 pour quitter ce dernier et atteindre l'extrémité droite du second rotor où elle va circuler de droite à gauche. Sur son parcours à travers les deux rotors la matière triturée décrit ainsi un parcours sensiblement en forme de S.

Les racleurs 25 et 26 possèdent un profil en escalier ayant une première 40 et une deuxième 41 marche. Il va de soi que le nombre de marches n'est pas limité à deux et peut être supérieur. La première marche 40, qui est située près de la sortie de chaque rotor, est disposée la plus près de la paroi externe du rotor. La deuxième marche 41 est quant à elle un peu plus éloignée du rotor. Le profil en escalier permet d'imposer, suivant le principe d'une vis d'Archimède, plusieurs rotations à la matière avant de quitter le stator et ainsi de la chauffer et de la triturer davantage. La trituration est ainsi moins tributaire du temps d'une seule rotation. Le parcours en S imposé à la matière permet de disposer les rotors de la façon la plus efficace tout en limitant l'espace occupé par l'unité. De préférence la première marche couvre un tiers de la longueur du racleur, alors que la deuxième couvre les deux tiers restant.

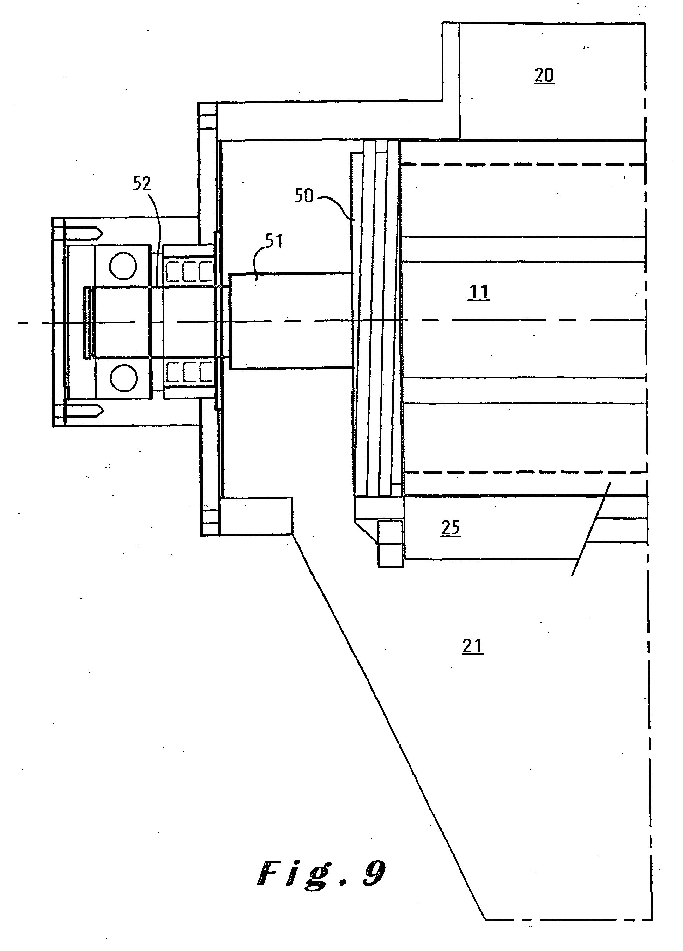

Lorsque l'unité comporte deux ou davantage de rotor et de stator montés en cascade l'un de l'autre, il est envisageable que l'entrée de l'un stator soit située au centre et celle d'un autre stator soit située à un côté latéral. Prenons le cas où un premier stator possède une entrée centrale et un deuxième, monté en aval du premier, possède une entrée latérale. Le premier stator possèdera alors une sortie située à une extrémité du rotor de telle façon que la sortie du premier stator soit alignée avec l'entrée du deuxième stator. La figure 9 illustre un exemple d'un stator ayant une entrée 20 centrale et une sortie 21 latérale.

Chaque rotor comporte un racleur 25 et le racleur associé au premier rotor qui possède une sortie à son extrémité est disposé de telle façon à ce que le raclage soit réalisé à cette extrémité du rotor. Le racleur associé au deuxième stator est disposé au centre du rotor auquel il est associé. De cette façon le raclage est réalisé exactement à l'endroit où est située la sortie.

Cette disposition des stators permet une meilleure répartition des masses à traiter et donc d'accroître la capacité de traitement sans devoir augmenter le volume des stators.

La figure 9 illustre également une réalisation particulière du profil du rotor 11. L'extrémité 50 du rotor 11 est équipée d'une vis d'Archimède orientée en sens inverse de celui le long duquel la matière à recycler circule. Cette configuration permet de protéger l'axe 51 et les roulements ou paliers 52 du rotor contre des dépôts de bitume. En effet, l'orientation en sens inverse va renvoyer la matière à recycler vers le reste de rotor l'empêchant ainsi d'atteindre l'axe 51 et les roulements ou paliers 52. De préférence, la vis d'Archimède orientée en sens inverse est placée à chaque extrémité du rotor.

Lorsque plusieurs rotors sont montés en cascade la vis d'Archimède du dernier rotor peut être réalisée de telle façon que la matière mise en fusion atteigne le degré de viscosité souhaité. Ainsi elle pourra franchir la vis d'Archimède et s'écouler au point le plus excentré du dernier rotor. Ceci permet de fermer davantage l'espace rotor/stator et d'obtenir une matière recyclée ayant une fluidité élevée.

La description qui vient d'être donnée était restreinte au recyclage de membranes bitumineuses. Toutefois, le procédé et l'unité décrits ne sont pas restreints à ce recyclage et peuvent être utilisés à d'autres applications nécessitant par exemple le broyage de structures fibreuses ou de matières dures enveloppées dans une matière qui devient pâteuse lorsqu'on la chauffe.

## Revendications

1. Unité de recyclage (1) agencée pour le recyclage d'une membrane bitumineuse pourvue d'au moins une armature, laquelle unité comporte un premier rotor (11) logé dans un premier stator (10), pourvu d'une chambre délimitée par une paroi externe du premier rotor, **caractérisée en ce que** la chambre est une chambre de trituration (29) formée par un évidement aménagé dans un contre-élément (14) monté sur le stator qui est sensiblement cylindrique, laquelle chambre de trituration comporte un moyen d'ajustement agencé pour ajuster le volume et/ou la forme de la chambre et **en ce qu'**au moins un racleur (25, 26) agencé pour racler la paroi externe du rotor est monté en aval de la chambre de trituration, lequel racleur s'étend sur au moins une partie de la longueur du premier rotor et possède un profil en escalier ayant au moins une première (40) et une deuxième (41) marche, la première marche, qui est située près d'une sortie de l'unité de recyclage, étant disposée la plus près de la paroi externe du premier rotor.

2. Unité de recyclage suivant la revendication 1, **caractérisée en ce qu'**elle est agencée pour le recyclage d'une membrane bitumineuse pourvue en surface d'un revêtement minéral et **en ce que** le contre-élément comporte une lame de couteau (14, 17) agencée pour pulvériser le revêtement minéral contre la paroi externe du rotor, laquelle lame de couteau est montée en aval de la chambre.

3. Unité de recyclage suivant l'une des revendications 1 ou 2, **caractérisée en ce que** la paroi externe du rotor possède un profil rainuré.

4. Unité de recyclage suivant la revendication 2, **caractérisée en ce que** le contre-élément et/ou le stator sont traités avec une substance anti-usure, en particulier au carbure de tungstène.

5. Unité de recyclage suivant l'une des revendications 2 à 4, **caractérisée en ce que** la lame de couteau est montée de façon à pouvoir ajuster sa distance par rapport à la paroi externe du rotor.

6. Unité de recyclage suivant l'une des revendications 1 à 5, **caractérisée en ce qu'**en aval de la chambre de trituration un déflecteur (23) est disposé dans une ouverture de sortie (21) de l'unité de recyclage, ledit déflecteur étant disposé le long d'une partie de la paroi externe du rotor.

7. Unité de recyclage suivant l'une des revendications 1 à 6, **caractérisée en ce qu'**elle comporte une ouverture d'entrée (20) et une ouverture de sortie (21) disposées le long d'un même axe qui est décalé par rapport à un axe central vertical du rotor.

8. Unité de recyclage suivant l'une des revendications 1 à 7, **caractérisée en ce qu'**elle comporte un second rotor (11') logé dans un second stator (10')pourvu d'une chambre interchangeable de trituration, lesquels second stator et rotor sont montés en aval du premier stator et rotor.

9. Unité de recyclage suivant la revendication 8, **caractérisée en ce qu'**un des premier et second stators possède une entrée centrale et l'autre une entrée latérale, le stator ayant l'entrée centrale possède une sortie située à une extrémité du rotor, à chacun des rotors est associé un desdits racleurs, le racleur associé au rotor se trouvant dans le stator ayant sa sortie à l'extrémité du rotor est disposé de façon à ce que le raclage soit réalisé à ladite extrémité, le racleur associé au rotor dont le stator possède une entrée latérale est disposé au centre du rotor auquel il est associé.

10. Unité de recyclage suivant l'une des revendications 1 à 9, **caractérisée en ce qu'**au moins un des racleurs est monté sur un pivot (25") agencé pour faire pivoter le racleur entre une première position où le racleur racle le long du rotor, une seconde position où le racleur obture une sortie de l'unité orientant le flux vers une sortie latérale, et une troisième position où le racleur libère totalement l'ouverture de façon à permettre l'évacuation par la force centrifuge ou le nettoyage de la sortie.

11. Unité de recyclage suivant l'une des revendications 1 à 10, **caractérisée en ce que** l'une (ou les) extrémité(s) du rotor est équipée d'une vis d'Archimède orientée en sens inverse de celui le long duquel la matière à recycler circule.

12. Procédé de recyclage d'une membrane bitumineuse pourvue d'au moins une armature, laquelle membrane est réduite en morceaux qui sont introduits dans une unité de recyclage, pourvu d'un premier rotor (11) qui est logé dans un premier stator (10) pourvu d'une chambre (29) délimitée par une paroi externe du premier rotor, lesdits morceaux étant amenés dans ladite chambre où ils sont malaxés et/ou broyés, les morceaux ainsi traités étant ensuite évacués de la chambre par écoulement le long de ladite paroi externe du rotor, **caractérisé en ce que** la forme et/ou le volume de la chambre sont modifiables en fonction de la nature ou de la taille des morceaux de membranes à recycler en positionnant un contre-élément (14) dans lequel est aménagé un évidement qui forme la chambre, lequel contre-élément est monté sur le premier stator qui est sensiblement cylindrique, les morceaux étant soumis à une trituration dans la chambre afin d'obtenir une mise en fusion du liant bitumineux contenu dans les morceaux, lequel liant bitumineux ainsi mis en fusion est raclé de la paroi externe du rotor par au moins un racleur (25, 26) possédant un profil en escalier ayant au moins une première (40) et une deuxième (41) marche et étant monté en aval de la chambre de trituration, lequel racleur impose plusieurs rotations à la matière avant de quitter le stator.

## Claims

1. Recycling unit (1) provided for recycling a bituminous membrane provided with at least one reinforcement, which unit comprises a first rotor (11) housed in a first stator (10), provided with a chamber delimited by an external wall of the first rotor, **characterised in that** the chamber is a trituration chamber (29) formed by a recess arranged in a counter-element (14) mounted on the stator which is substantially cylindrical, which trituration chamber comprises an adjustment means provided to adjust the volume and/or shape of the chamber and wherein at least one scraper (25, 26) provided to scrape the external wall of the rotor is mounted downstream of the trituration chamber, which scraper extends over at least part of the length of the first rotor and has a stepped profile having at least a first (40) and a second (41) step, the first step, which is situated close to an output of the recycling unit, being disposed closest to the external wall of the first rotor.

2. Recycling unit as claimed in claim 1, **characterised in that** it is provided for recycling a bituminous membrane provided on the surface with a mineral covering and wherein the counter-element comprises a knife blade (14, 17) provided to pulverise the mineral covering against the external wall of the rotor, which knife blade is mounted downstream of the chamber.

3. Recycling unit as claimed in either of claims 1 or 2, **characterised in that** the external wall of the rotor has a grooved profile.

4. Recycling unit as claimed in claim 2, **characterised in that** the counter-element and/or the stator are treated with a wear-resistant substance, in particular tungsten carbide.

5. Recycling unit as claimed in one of claims 2 to 4, **characterised in that** the knife blade is mounted so as to make it possible to adjust its distance with respect to the external wall of the rotor.

6. Recycling unit as claimed in one of claims 1 to 5, **characterised in that,** downstream of the trituration chamber, a deflector (23) is disposed in an output opening (21) of the recycling unit, said deflector being disposed along part of the external wall of the rotor.

7. Recycling unit as claimed in one of claims 1 to 6, **characterised in that** it comprises an input opening (20) and an output opening (21) disposed along the same axis that is offset with respect to a vertical central axis of the rotor.

8. Recycling unit as claimed in one of claims 1 to 7, **characterised in that** it comprises a second rotor (11') housed in a second stator (10') provided with an interchangeable trituration chamber, which second stator and rotor are mounted downstream of the first stator and rotor.

9. Recycling unit as claimed in claim 8, **characterised in that** one of the first and second stators has a central input and the other a lateral input, the stator having the central input has an output situated at one end of the rotor, with each of the rotors there is associated one of said scrapers, the scraper associated with the rotor situated in the stator having its output at the end of the rotor is disposed so that the scraping is carried out at said end, the scraper associated with the rotor whose stator has a lateral input is disposed at the center of the rotor with which it is associated.

10. Recycling unit as claimed in one of claims 1 to 9, **characterised in that** at least one of the scrapers is mounted on a pivot (25") provided to make the scraper pivot between a first position where the scraper scrapes along the rotor, a second position where the scraper closes off an output of the unit directing the flow to a lateral output, and a third position where the scraper completely frees the opening so as to allow discharge by centrifugal force or cleaning of the output.

11. Recycling unit as claimed in one of claims 1 to 10, **characterised in that** one end (or the ends) of the rotor is (are) equipped with an Archimedes screw oriented in the reverse direction to that along which the material to be recycled circulates.

12. Method for recycling a bituminous membrane provided with at least one reinforcement, which membrane is reduced to pieces which are introduced into a recycling unit, provided with a first rotor (11) which is housed in a first stator (10) provided with a chamber (29) delimited by an external wall of the first rotor, said pieces being conveyed into said chamber where they are mixed and/or ground, the pieces thus processed then being discharged from the chamber by flowing along said external wall of the rotor, **characterised in that** the shape and/or volume of the chamber can be modified according to the nature or size of the pieces of membrane to be recycled by positioning a counter-element (14) in which there is arranged a recess that forms the chamber, which counter-element is mounted on the first stator which is substantially cylindrical, the pieces being subjected to a trituration in the chamber in order to obtain melting of the bituminous binder contained in the pieces, which bituminous binder thus melted is scraped from the external wall of the rotor by at least one scraper (25, 26) having a stepped profile having at least a first (40) and a second (41) step and being mounted downstream of the trituration chamber, which scraper imposes several rotations on the material before leaving the stator.

## Patentansprüche

1. Recyclingeinheit (1), die für das Recyceln einer bitumenhaltigen Membran, die mit mindestens einer Bewehrung versehen ist, eingerichtet ist, wobei die Einheit einen ersten Rotor (11) aufweist, der in einem ersten Stator (10) untergebracht ist, versehen mit einer Kammer, die von einer Außenwand des ersten Rotors abgegrenzt ist, **dadurch gekennzeichnet, dass** die Kammer eine Zerkleinerungskammer (29) ist, die aus einer Aussparung ausgebildet ist, die in einem Gegenelement (14) eingerichtet ist, das auf dem Stator installiert ist, der im Wesentlichen zylindrisch ist, wobei die Zerkleinerungskammer ein Einstellmittel aufweist, das eingerichtet ist, um das Volumen und/oder die Form der Kammer anzupassen, und dass mindestens ein Abstreifer (25, 26), der eingerichtet ist, um die Außenwand des Motors abzustreifen, stromabwärts von der Zerkleinerungskammer installiert ist, wobei sich der Abstreifer auf mindestens einen Teil der Länge des ersten Rotors erstreckt und ein treppenartiges Profil mit mindestens einer ersten (40) und einer zweiten (41) Stufe aufweist, wobei die erste Stufe, die sich in der Nähe des Ausgangs der Recyclingeinheit befindet, möglichst nahe an der Außenwand des ersten Rotors angeordnet ist.

2. Recyclingeinheit nach Anspruch 1, **dadurch gekennzeichnet, dass** sie zum Recyceln einer bitumenhaltigen Membran, die auf der Oberfläche mit einer mineralischen Beschichtung versehen ist, vorgesehen ist, und dass das Gegenelement eine Messerklinge (14, 17) aufweist, die eingerichtet ist, um die mineralische Beschichtung gegen die Außenwand des Rotors zu zermahlen, wobei die Messerklinge stromabwärts von der Kammer installiert ist.

3. Recyclingeinheit nach einem der Ansprüche 1 oder 2, **dadurch gekennzeichnet, dass** die Außenwand des Rotors ein gerilltes Profil aufweist.

4. Recyclingeinheit nach Anspruch 2, **dadurch gekennzeichnet, dass** das Gegenelement und/oder der Stator mit einer Verschleißschutzsubstanz, insbesondere Wolframkarbid behandelt ist/sind.

5. Recyclingeinheit nach einem der Ansprüche 2 bis 4, **dadurch gekennzeichnet, dass** die Messerklinge derart installiert ist, dass ihre Entfernung von der Außenwand des Rotors eingestellt werden kann.

6. Recyclingeinheit nach einem der Ansprüche 1 bis 5, **dadurch gekennzeichnet, dass** stromabwärts der Zerkleinerungskammer ein Ablenker (23) in einer Ausgangsöffnung (21) der Recyclingeinheit angeordnet ist, wobei der Ablenker entlang eines Teils der Außenwand des Rotors angeordnet ist.

7. Recyclingeinheit nach einem der Ansprüche 1 bis 6, **dadurch gekennzeichnet, dass** sie eine Eingangsöffnung (20) und eine Ausgangsöffnung (21) aufweist, die entlang einer gleichen Achse, die in Bezug auf eine zentrale vertikale Achse des Rotors versetzt ist, angeordnet sind.

8. Recyclingeinheit nach einem der Ansprüche 1 bis 7, **dadurch gekennzeichnet, dass** sie einen zweiten Rotor (11') aufweist, der in einem zweiten Stator (10') untergebracht ist, der mit einer austauschbaren Zerkleinerungskammer versehen ist, wobei der zweite Stator und Rotor stromabwärts des ersten Stators und Rotors installiert sind.

9. Recyclingeinheit nach Anspruch 8, **dadurch gekennzeichnet, dass** der erste oder der zweite Stator einen zentralen Eingang aufweist und der andere einen seitlichen Eingang, wobei der Stator mit dem zentralen Eingang einen Ausgang besitzt, der sich an einem Ende des Rotors befindet, wobei mit jedem Rotor einer der Abstreifer verbunden ist, wobei der Abstreifer, der mit dem Rotor verbunden ist, der sich in dem Stator befindet, der seinen Ausgang am Ende des Rotors hat, derart angeordnet ist, dass das Abstreifen an dem Ende erfolgt, wobei der Abstreifer, der mit dem Rotor, dessen Stator einen seitlichen Eingang besitzt, verbunden ist, in der Mitte des Rotors, zu dem er gehört, angeordnet ist.

10. Recyclingeinheit nach einem der Ansprüche 1 bis 9, **dadurch gekennzeichnet, dass** mindestens einer der Abstreifer auf einem Zapfen (25") montiert ist, der eingerichtet ist, um den Abstreifer zwischen einer ersten Position, in der der Abstreifer entlang des Rotors abstreift, einer zweiten Position, in der der Abstreifer einen Ausgang der Einheit verschließt, die den Strom zu einem Seitenausgang lenkt, und einer dritten Position, in der der Abstreifer die Öffnung derart komplett freigibt, dass das Entleeren durch Zentrifugalkraft oder Reinigen des Ausgangs erlaubt wird, zu schwenken.

11. Recyclingeinheit nach einem der Ansprüche 1 bis 10, **dadurch gekennzeichnet, dass** das oder die Enden des Rotors mit einer archimedischen Schraube versehen ist/sind, die in umgekehrte Richtung zu der ausgerichtet ist, entlang welcher das zu recycelnde Material zirkuliert.

12. Recyclingverfahren einer bitumenhaltigen Membran, die mit mindestens einer Bewehrung versehen ist, wobei die Membran in Stücke zerkleinert wird, die in eine Recyclingeinheit eingeführt werden, versehen mit einem ersten Rotor (11), der in einem ersten Stator (10) untergebracht ist, der mit einer Kammer (29) versehen ist, die in einer Außenwand des ersten Rotors abgegrenzt ist, wobei die Stücke in die Kammer gebracht werden, wo sie durchgeknetet und/oder zerkleinert werden, wobei die so behandelten Stücke anschließend aus der Kammer durch Fließen entlang der Außenwand des Rotors entleert werden, **dadurch gekennzeichnet, dass** die Form und/oder das Volumen der Kammer in Abhängigkeit von der Beschaffenheit oder der Größe der zu recycelnden Membranstücke veränderlich ist/sind, indem ein Gegenelement (14), in dem eine Aussparung eingerichtet ist, die die Kammer bildet, positioniert wird, wobei das Gegenelement auf den ersten Stator montiert ist, der im Wesentlichen zylindrisch ist, wobei die Stücke einer Zerkleinerung in der Kammer unterworfen werden, um ein Schmelzen des bitumenhaltigen Bindemittels zu erzielen, das in den Stücken enthalten ist, wobei das bitumenhaltige Bindemittel, das so zum Schmelzen gebracht wird, von der Außenwand des Rotors durch mindestens einen Abstreifer (25, 26), der ein treppenartiges Profil hat, das mindestens eine erste (40) und eine zweite (41) Stufe aufweist und stromabwärts von der Zerkleinerungskammer installiert ist, abgestreift wird, wobei der Abstreifer dem Material, bevor es den Stator verlässt, mehrere Rotationen auferlegt.
